# EUROPEAN PATENT APPLICATION

(11) **EP 3 176 707 A1**
(43) Date of publication of application: **07.06.2017**
(21) Application number: 15197824.4
(22) Date of filing: 03.12.2015
(51) Int. Cl.: G06F 17/30

(54) **METHOD AND ELECTRONIC DEVICE FOR READING MUSIC**

(71) Applicant: Casiraghi, Sandro, 20092 Cinisello Balsamo (MI) (IT)
(72) Inventor: Casiraghi, Sandro, 20092 Cinisello Balsamo (MI) (IT)
(74) Representative: Laghi, Alberto

(57) **Abstract**

Method and electronic device for reading music by an user, comprises a first part directed to a creation of a new user on Web, a second part directed to gathering and uploading on Cloud of data files relating to music scores with preferred categorization into meaningful sections for said user; and a third part directed to selecting and downloading of at least one said file to be read, to playing music read on said one file and to adding and saving on said one file of user's handwritten notes.

## Description

The present invention relates to a method and electronic device for reading music.

In particular, the invention in object is expected to be advantageously used by whoever is fond of music playing, such as music students, music amateurs, professional musicians all over the world, playing alone, in band or orchestras, to which the following description makes explicit reference without thereby losing its generality, for optimal playing music displayed on all the music scores or sheets recorded in electronic formats.

### State of the Art

Electronic music display devices are known and proposed for displaying music scores using input music score files with industry standard file formats. These files formats include notational and image based formats that have been developed for composing and publishing music scores on a fixed page size. Image based formats use image data to represent each page of a music score. Well known PNG, TIFF JPG, and especially PDF files are currently representative of electronic formats.

At present, such known devices are very expensive, often bulky and cannot be easily transported, especially during travels.

Moreover, most of the known devices don't allow musicians to make and save handwritten modifications and/or any useful notes on the scores during everyday practice.

The aim of the present invention is to overcome the drawbacks mentioned above.

The structural and functional characteristics of the present invention and their advantages over the known art will be clearer and more evident from the claims below, and in particular from an examination of the description that follows, referring to the attached drawings, showing a preferred but non-limiting embodiment of flow charts representing the method for reading music in object, in which:

### Drawings

- Figure 1 is a schematic flow chart of a first part of the method for the creation of a new user;
- Figures 2a and 2b are schematic flow charts of a second part of the method for the gathering of the data, their storage on the cloud and their categorization into meaningful sections for the musician; and
- Figure 3 is a schematic flow chart of a third part of the method for the everyday using during the common music practice.

### Detailed description

With reference to the attached figures, the method for reading music substantially comprises three parts to be executed on an portable electronic device, such as a tablet o similar, herein after indicated as PAD or PAMU (as *Pad for Musician*), preferably light, thin, with single A4 screen size or, preferably but not limited to, double A4 screen size with the possibility to fold one A4 screen size over the other.

Moreover, one of the possible solutions related to the portable electronic device will preferably take advantage of the display technology known as *"eink"* (by e.ink company).

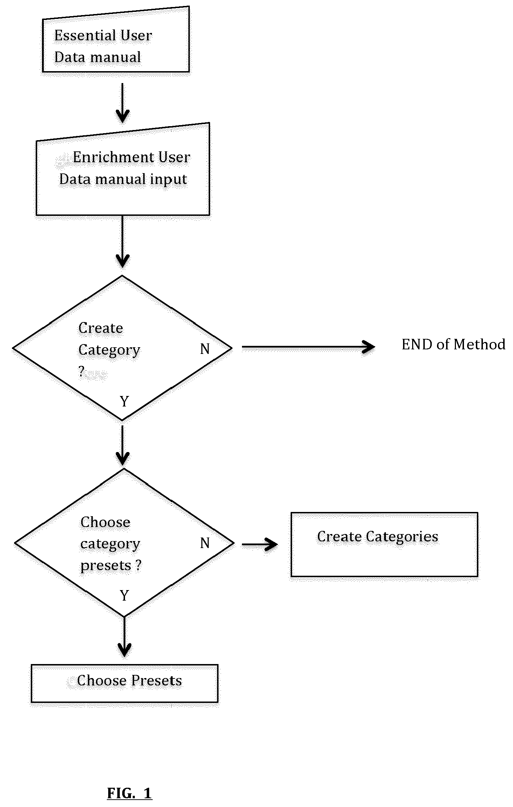

According to figure 1, a first part of the method directed to the creation of a new user on Web comprises the following steps:
- Essential User Data Manual input:
   The user can register himself as a new one. He/She will be asked only to choose userid, password and a mail contact address.
- Enrichment User Data Manual Input:
   After having successfully registered as a new one , the user will be prompted to insert more data relevant to his profile, like e.g. kind of activity, professional, amateur, orchestra, band etc..
- Categorization:
   In this step the user will be asked whether to choose preset categories or to create new sets of them.
- Synchronization (*WIFI connection requested*):
   In case of user login created for the first time on the PAD, all the data will be ulploaded on the Web. In case of user login created for the first time on the Web, the login process will be available also on the PAD.

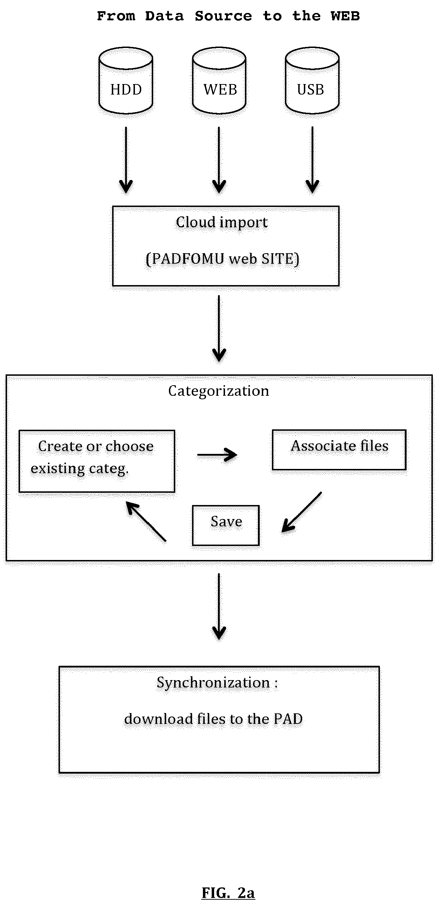

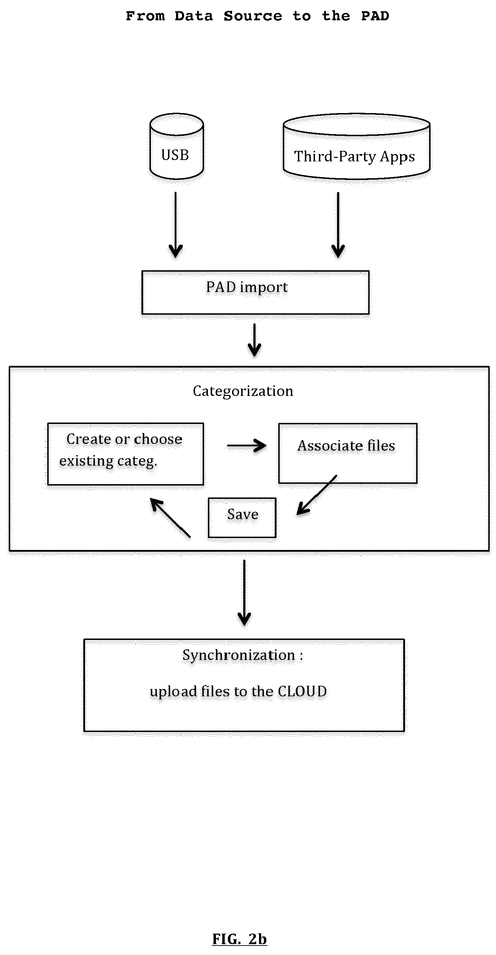

According to figures 2a and 2b, a second part of the method directed to gathering to gathering and uploading on Cloud of data files relating to music scores with preferred categorization into meaningful sections for the user-musician, comprises the following steps:
- Data import:
   The user can add a new document(s) to the system either to the *Cloud* storage on the Web or directly to the PAD via USB key or via import from third-parties applications i.e. Dropbox®, Google Drive® etc..
- Categorization:
   The user can organize file documents he has previuosly added, into categories.

Such categories have to be at first created and than the user will proceed to associate documents to them. This action can be pursued both on the PAD and on the Web. Categories can be created also immediately after the set up of a new user has been completed.
- Synchronization (*WIFI connection requested*):
   Following the creation of categories and files association to them, or the changes to any of the files, the system has to make sure that the Cloud archive (WEB) matches exactly the PAD archive (local). In case of file conflict, the user will be prompted upon which file(s) to keep.

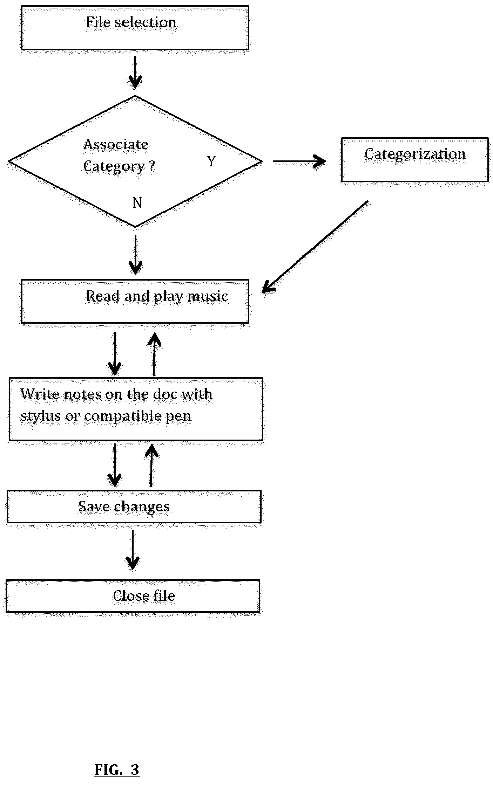

According to figure 3, a third part of the method directed to the everyday use of the device PAMU during the common music practice, comprises the following steps:
- File Selection:
   The user can choose a file to be opened from a list or from a set of files previously associated to a category.
- Associate category and Categorization:
   In case of a file not yet associated to a category, the user can choose whether to associate it or not. If the categorization process is chosen, the step can be repeated as above.
- Read and play music, write notes and save them:
   Such step is very straightforward. The user while reading and studying music can repeatedly add notes manually to the document and save them later on. While reading music the user can turn pages pressing a pedal (as known) on the floor that communicates via bluetooth with the device.
- Close file:
   At the end of the practice session, the user may want to close the file. If any changes have not been saved so far, the user will be prompted to do so.

With the method and the device PAMU as described above the following advantages can be easily reached:
- User profiling;
- PDF format files compatibility;
- Capability to read files;
- Capability to modify files using stylus-pen with useful user's handwriting and save the changes. After the file has been saved, a new version of it should be created, including all the changes (versioning);
- The original version of the file should be always kept;
- A Music Archive Management System will allow the user to categorize the music score into custom sets like for example "Studies", "Repertoire", "Century", "Solo", "Orchestral Excerpts" etc.;
- Metronome and Pitch Tuning functions available;
- Capability to turn pages while playing, by a screen touch, by known pedal Bluetooth compatible or by listening to music played by the user;
- All the categorized music will be stored using *Cloud technology* services offered as a free and/or with payment service.

## Claims

1. Method for reading music, **characterized in that** it comprises a first part directed to a creation of a user on Web, a second part directed to gathering and uploading on Cloud of data files relating to music scores with preferred categorization into meaningful sections for said user; and a third part directed to selecting and downloading of at least one said file to be read, to playing music read on said one file and to adding and saving on said one file of user's handwritten notes.

2. Method according to claim 1, **characterized in that** said first part comprises the following steps: - Essential User Data Manual input for registering user's data; - Enrichment User Data Manual Input for inserting more data relevant to user's profile; - Categorization for choosing preset or new categories; - and Web Synchronization.

3. Method according to claim 1 or 2, **characterized in that** said second part comprises the following steps: - Data import for adding at least a new file document;- Categorization for organizing data files; - and Web Synchronization.

4. Method according to any claim 1 to 3, **characterized in that** said second part comprises the following steps: - File Selection for selecting data files to be opened; - Associate category and Categorization for selecting categorized files; - Read and play music, write notes and save; - and Closing file.

5. Portable electronic device to be used for executing the method for reading music according to any claim 1 to 4.

6. Portable electronic device according to claim 5, **characterized in that** it comprises a double screen, with one screen being foldable over the other.
